# EUROPÄISCHE PATENTANMELDUNG

(11) **EP 0 628 473 A1**
(43) Veröffentlichungstag der Anmeldung: **14.12.1994**
(21) Anmeldenummer: 94107704.2
(22) Anmeldetag: 18.05.1994
(51) Int. Cl.: B62L 1/14

(54) **Felgenbremse, insbesondere für Mountainbike- und Trekkingfahrräder**

(30) Priorität: 18.05.1993 DE 9307514 U
(71) Anmelder: Jochem, Martin, D-78315 Radolfzell (DE); Köhler, Thomas, D-78315 Radolfzell (DE)
(72) Erfinder: Jochem, Martin, D-78315 Radolfzell (DE); Köhler, Thomas, D-78315 Radolfzell (DE)

(57) **Zusammenfassung**

Eine bekannte Bremse hat den Nachteil, daß durch lange Bremshebel die auf die Lagerzapfen der Bremshebel einwirkende Kraft zur Verbiegung des Fußes des Lagerzapfens führen kann.

Bei der neuen Felgenbremse soll das Verhältnis von ausgeübter Handkraft zu ausgelöster Bremskraft verbessert werden.

Eine Zughülle (1) mit Bremszug (2) ist im Bereich der freien Enden der Bremshebel (3, 4) von einer Seite her an den ersten Bremshebel (3) geführt. Die Zughülle (1) stützt sich am ersten Bremshebel (3) ab. Der Bremszug (2) verläuft weiter zum zweiten Bremshebel (4) und ist dort eingehängt. Der Bremszug (2) verläuft axial durch die zwischen den beiden Bremshebeln (3, 4) angeordnete, einzige Rückstellfeder (5). Auf den Lagerzapfen (11, 12) für die Bremshebel (3, 4) sitzend ist jeweils eine justierbare Zentrierscheibe (13, 14) mit einer kreissegmentförmigen Anschlagnut (15, 16) mit gabelfesten Lagerzapfen (11, 12) fest verschraubbar gelagert. Jeder Bremshebel (3, 4) hat einen Zentrierstift (17, 18), der im Ruhezustand der Felgenbremse (100) bei von der Radfelge (210) gelösten Bremsklötzen (8, 9) am Ende der Anschlagnut (15, 16) anschlägt.

Es vorteilhaft, daß nur eine einzige Rückstellfeder, zwischen den Bremshebeln nötig ist.

## Beschreibung

Die Erfindung bezieht sich auf eine Felgenbremse, insbesondere für Mountainbike- und Trekkingfahrräder, mit einem Paar voneinander getrennter, jeweils an ihrem unteren Ende fahrradgabel- oder fahrradrahmenseitig verschwenkbar gelagerter Bremshebel mit Bremsklötzen.

Felgenbremsen für den Einsatz bei Mountainbike- und Trekkingrädern müssen auch bei Nässe und Schmutzeinwirkung noch gute Bremswerte erbringen. Dabei kommt dem Verhältnis von ausgeübter Handkraft zu dadurch bewirkter Bremskraft besondere Bedeutung zu.

Eine bekannte Felgenbremse besteht aus zwei Bremshebeln, die jeweils am unteren Ende an einem rahmenfesten Lagerzapfen verschwenkbar gelagert sind. Beim Bremsen verschwenken die Bremshebel um die Lagerzapfen senkrecht zur Laufrichtung der Felgen und pressen die Bremsgummis gegen die Felgenflanken.

Ein Bremszug teilt sich zwischen den beiden oberen Enden der Bremshebel in zwei Querzüge auf, die an den Bremshebeln enden. Die Querzüge werden durch den Bremszug, der in der Mitte über der Felge an den Querzügen befestigt ist, nach oben hin gespannt. Dabei müssen die Querzüge so lang sein, daß sie dem Reifen genügend Platz bieten, um sich frei unter ihnen durchbewegen zu können. Wird der Bremszug durch den Bremsgriff gespannt, so werden die Bremsgummis an den Bremshebeln mittels der Querzüge gegen die Felge gepreßt und bewirken das Abbremsen des Rades. Die Rückstellung der Bremse erfolgt über zwei Federn, die zwischen den Bremshebeln und den Lagerzapfenfüßen befestigt sind, und sich sowohl an den Bremshebeln als auch an den Lagerzapfenfüßen abstützen.

Es sind Bremshebel bekannt, die so lang sind, daß man den Bremszug unmittelbar zwischen den oberen Enden der Bremshebel quer über den Reifen führen kann. Dies geschieht dadurch, daß sich die Zughülle zur Führung des Bremszugs unmittelbar an einem der beiden Bremshebel abstützt.

Die bekannte Bremse hat aber den Nachteil, daß durch die längeren Bremshebel die auf die Lagerzapfen der Bremshebel einwirkende Kraft wesentlich größer ist als bei herkömmlichen Bremsen. Hierdurch kann sich der Fuß des Lagerzapfens leicht verbiegen.

Bei bekannten Felgenbremsen dürfen die Bremsbacken zur Vermeidung von Eigenresonanzschwingungen beim Bremsen nicht parallel zur Felge eingestellt werden. Dies hat aber leider eine Herabsetzung der Bremswirkung zur Folge.

Der Erfindung liegt die Aufgabe zugrunde, eine Felgenbremse der eingangs genannten Art zu schaffen, bei der das Verhältnis von ausgeübter Handkraft zu dadurch bewirkter Bremskraft verbessert ist, und die exakt eingestellt werden kann.

Erfindungsgemäß wird die Aufgabe dadurch gelöst, daß die Zughülle mit dem Bremszug im Bereich der freien Enden der Bremshebel von einer Seite her an den ersten Bremshebel geführt ist, sich die Zughülle am ersten Bremshebel abstützt, und der Bremszug weiter zum zweiten Bremshebel verläuft und dort eingehängt ist, und daß eine Rückstellfeder jeden der beiden Bremshebel in dessen Ruhestellung jeweils derart gegen einen Anschlag hält, daß die Bremsklötze mit ausreichendem Abstand von der Radfelge gelöst sind.

Die erfindungsgemäße Felgenbremse hat gegenüber dem Bekannten die Vorteile, daß nur **eine** Rückstellfeder, zwischen den beiden Bremshebeln etwa in Höhe des quer verlaufenden Bremszuges nötig ist. Hierdurch rückt jeder der beiden Bremshebel näher an den Fuß des Lagerzapfens für die Bremshebel. Damit wirkt jeweils die Kraft, die versucht, den betreffenden Lagerzapfen für die Bremshebel zu verbiegen, nur auf etwa den halben Hebel.

Gemäß einer Ausbildung der Erfindung verläuft bei der Felgenbremse der Bremszug durch die Achse der zwischen den beiden Bremshebeln angeordneten Rückstellfeder.

Diese Maßnahme unterstützt die Symmetrie der Felgenbremse, und es ist nur eine relativ einfache Rückstellfeder nötig, die keine besondere Formfeder zu sein braucht.

Eine weitere Ausbildung der Erfindung sieht vor, daß auf einem der Lagerzapfen für den betreffenden Bremshebel sitzend eine justierbare Zentrierscheibe mit einer kreissegmentförmigen Anschlagnut mit dem Lagerzapfen fest verschraubt ist, und einer der Bremshebel einen Zentrierstift aufweist, der im Ruhezustand der Felgenbremse am Ende der Anschlagnut anschlägt, wobei die Bremsklötze von der Radfelge symmetrisch gelöst sind.

Hierdurch kann die Felgenbremse besonderes leicht symmetrisch zentriert werden, und die gefundene Einstellung bleibt stabil erhalten.

Gemäß einer weiteren Ausbildung der Erfindung ist auf den Lagerzapfen für die Bremshebel sitzend jeweils eine justierbare Zentrierscheibe mit einer kreissegmentförmigen Anschlagnut mit den Lagerzapfen fest verschraubt, und die Bremshebel haben jeweils einen Zentrierstift, der im Ruhezustand der Felgenbremse am Ende der Anschlagnut anschlägt, wobei die Bremsklötze von der Radfelge symmetrisch gelöst sind.

Diese Ausführung gewährleistet eine langfristig bleibende Symmetrie der eingestellten Felgenbremse.

Eine weitere Ausbildung der Erfindung sieht vor, daß in den Zentrierscheiben jeweils eine in die Anschlagnut mehr oder weniger weit eindrehbare Anschlagschraube vorgesehen ist, an die der an dem betreffenden Bremshebel fest angebrachte Zentrierstift in Ruhestellung der Felgenbremse anschlägt.

Diese Maßnahme erleichtert die symmetrische Einstellung der Felgenbremse und erlaubt durch Herausdrehen einer oder beider Anschlagschrauben das schnelle Voneinanderwegschwenken der beiden Bremshebel, so daß bei Ausbau des betreffenden Rades die Radfelge mit darauf sitzendem Reifen ohne Behinderung die Bremsklötze passieren kann.

Nach einer weiteren Ausbildung der Erfindung ist die Rückstellfeder eine Schraubendruckfeder.

Dadurch können eine besondere Justage der Rückstellfeder entfallen und die Kosten für die Herstellung der Felgenbremse gesenkt werden.

Gemäß einem weiteren Ausführungsbeispiel der Erfindung befindet sich zwischen dem betreffenden Bremshebel und der ihm jeweils zugeordneten Zentrierscheibe eine Scheibe mit niedrigem Reibungskoeffizienten.

Hierdurch ist die Reibung zwischen den Bremshebeln und den ihnen jeweils zugeordneten Zentrierscheiben sehr niedrig.

Ein weiteres Ausführungsbeispiel der Erfindung sieht vor, daß die Scheibe mit niedrigem Reibungskoeffizienten aus glasfaserverstärkter TEFLON-Folie hergestellt ist.

Dieses Material sichert niedrige Reibung zwischen Bremshebeln und Zentrierscheiben sowie große Haltbarkeit der Scheiben selbst.

Aufgrund des günstigen, konstruktiven Aufbaus der Felgenbremse treten keine Eigenresonanzschwingungen auf, so daß die Bremsbacken parallel zur Felge eingestellt werden können. Dadurch bleibt die volle Bremswirkung der Felgenbremse erhalten.

Weitere vorteilhafte Ausgestaltungen der Erfindung gehen aus der nachfolgenden Beschreibung und den Zeichnungen hervor.

Die Erfindung wird an einem Ausführungsbeispiel anhand von Zeichnungen erläutert. Es zeigen
Fig. 1 eine Frontansicht der Felgenbremse, teilweise im Schnitt, zusammen mit den relevanten Bereichen der Fahrradgabel und des zu bremsenden Rads,
Fig. 2 eine Seitenansicht, teilweise im Schnitt, der Felgenbremse gemäß Fig. 1 zusammen mit den relevanten Bereichen der Fahrradgabel und des zu bremsenden Rads.

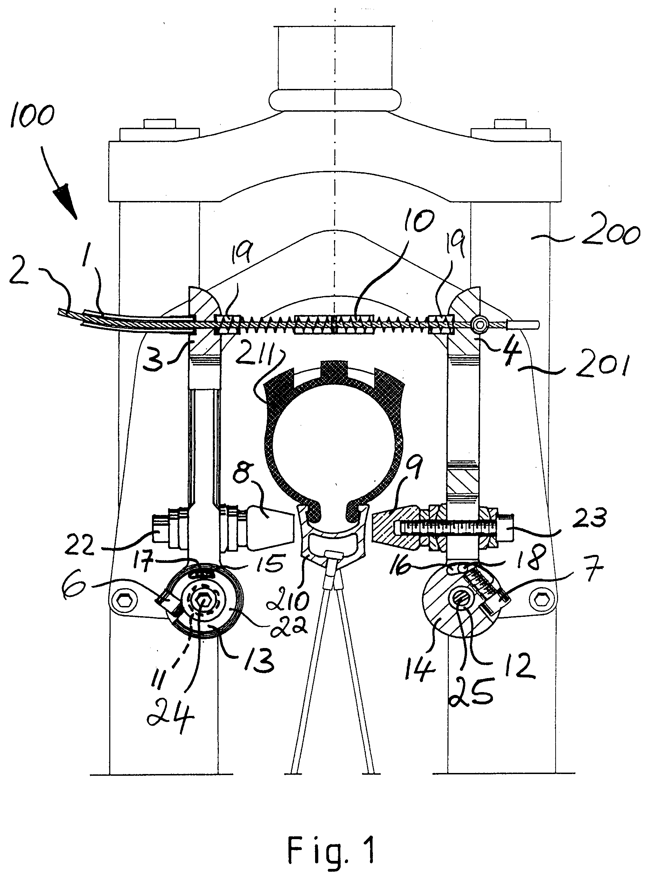

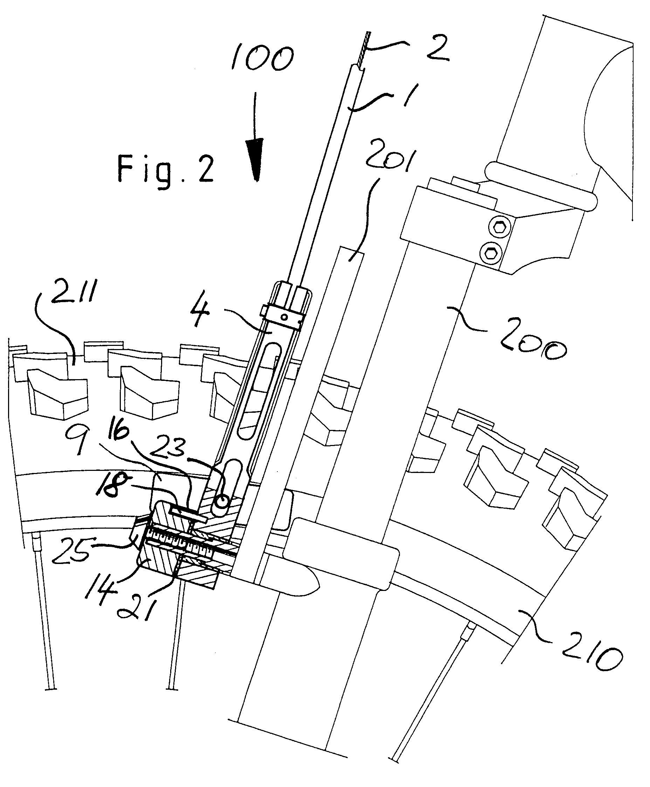

Auf der einen Seite einer Radfelge 210 (Fig. 1) ist ein Bremshebel 3 an einem Ende auf einem Lagerzapfen 11 verschwenkbar gelagert. Auf der anderen Seite der Radfelge 210 ist ein Bremshebel 4 (Fig. 1, 2) an einem Ende auf einem Lagerzapfen 12 verschwenkbar gelagert.

Bei dem vorliegenden Ausführungsbeispiel der Erfindung sind die Lagerzapfen 11, 12 fest auf einer Platte 201 angebracht, die ihrerseits fest an der Fahrradgabel 200 eines Fahrrads befestigt ist.

Die Lagerzapfen 11, 12 können aber auch unmittelbar an der Fahrradgabel 200 des Fahrrads angebracht sein.

In Nähe der Lagerzapfen 11, 12 tragen die Bremshebel 3, 4 Bremsklötze 8, 9, die zum Zweck des Abbremsens der Radfelge 210 mit ihr in Wirkverbindung treten.

Zum Zweck des Abbremsens der Radfelge 210 werden die Bremshebel 3, 4 an ihren freien Enden so betätigt, daß sie um die Lagerzapfen 11, 12 aufeinander zu verschwenken.

Hierzu ist eine Zughülle 1 (Fig. 1) mit einem Bremszug 2 im Bereich der freien Enden der Bremshebel 3, 4 von einer Seite her an den ersten Bremshebel 3 geführt. Die Zughülle 1 stützt sich am ersten Bremshebel 3 ab. Der Bremszug 2 verläuft vom ersten Bremshebel 3 aus weiter zum zweiten Bremshebel 4 und ist dort eingehängt. Ist die Felgenbremse 100 nicht betätigt, befindet sie sich also in ihrer Ruhestellung, hält eine Rückstellfeder 5 die beiden Bremshebel 3, 4 derart in ihren Ruhestellungen gegen einen Anschlag, daß die Bremsklötze 8, 9 mit ausreichendem Abstand von der Radfelge 210 gelöst sind.

Der Bremszug 2 verläuft durch die Achse der zwischen den beiden Bremshebeln 3, 4 angeordneten Rückstellfeder 5. Die Rückstellfeder 5 ist eine Schraubendruckfeder. Auf ihr gleitet lose eine starre Hülse 10, die nur einen Teil der Länge der entspannten Rückstellfeder 5 ausmacht.

Die Enden der Rückstellfeder 5 sitzen in bremshebelseitig jeweils mit einem Boden versehenen Hülsen 19. Der Boden einer jeden Hülse 19 ist so weit aufgebohrt, daß der Bremszug 2 hindurchpaßt. Die Hülsen 19 sitzen jeweils in einer Vertiefung an den Bremshebeln 3, 4.

Auf einem der Lagerzapfen 11 bzw. 12 für den betreffenden Bremshebel 3 bzw. 4 sitzend ist eine justierbare Zentrierscheibe 13 bzw. 14 (Fig. 1) mit einer kreissegmentförmigen Anschlagnut 15 bzw. 16 mit dem Lagerzapfen 11 bzw. 12 fest verschraubt. Einer der Bremshebel 3 bzw. 4 weist einen Zentrierstift 17 bzw. 18 auf, der im Ruhezustand der Felgenbremse 100 am Ende der Anschlagnut 15 bzw. 16 anschlägt, wobei die Bremsklötze 8, 9 von der Radfelge 210 gelöst sind.

Alternativ hierzu ist auf beiden Lagerzapfen 11, 12 für die Bremshebel 3, 4 sitzend jeweils eine justierbare Zentrierscheibe 13, 14 mit einer kreissegmentförmigen Anschlagnut 15, 16 mit den Lagerzapfen 11, 12 fest verschraubt. Beide Bremshebel 3, 4 haben jeweils einen Zentrierstift 17, 18, der im Ruhezustand der Felgenbremse 100 - also wenn sie nicht betätigt ist - am Ende der Anschlagnut 15, 16 anschlägt, wobei die Bremsklötze 8, 9 von der Radfelge 210 gelöst sind.

Bei einem anderen Ausführungsbeispiel der Erfindung ist in den Zentrierscheiben 13, 14 jeweils eine in die Anschlagnut 15, 16 mehr oder weniger weit eindrehbare Anschlagschraube 6, 7 vorgesehen. An die Anschlagschraube 6, 7 schlägt der an dem betreffenden Bremshebel 3, 4 fest angebrachte Zentrierstift 17, 18 in Ruhestellung der Felgenbremse 100 an. Hierdurch kann die Felgenbremse 100 genau justiert werden.

Es ergibt sich ein weiterer Vorteil. Soll nämlich die Felge 210 mit dem darauf befindlichen Reifen 211 aus der Fahrradgabel 200 ausgebaut werden, so werden die Anschlagschrauben 6, 7 so weit herausgedreht, bis die Bremshebel 3, 4, die unter dem Druck der vorgespannten Rückstellfeder 5 stehen, mit den Bremsklötzen 8, 9 ausreichend weit voneinander wegschwenken und eine mühelose Entnahme der Radfelge 210 mit dem darauf befindlichen Reifen 211 aus der Fahrradgabel 200 möglich ist.

Die Zentrierscheiben 13, 14 sind mittels Schrauben 24, 25 jeweils gegen den dazugehörigen Lagerzapfen 11, 12 gehalten. Die Schrauben 24, 25 sind in entsprechende Gewinde in den Lagerzapfen 11, 12 eingedreht.

Zur Montage der Felgenbremse 100 wird die jeweilige Zentrierscheibe 13, 14 auf den entsprechenden Lagerzapfen 11, 12 aufgesteckt, entsprechend der gewünschten Einstellung des Anschlags für den betreffenden Bremshebel 3, 4 auf dem Lagerzapfen 11, 12 verdreht, und dann wird in der gefundenen Einstellung die betreffende Schraube 24, 25 in einem solchen Umfang festgedreht, daß sich die Zentrierscheibe 13, 14 gegenüber dem Lagerzapfen 11, 12 nicht mehr verdrehen kann.

Wird gebremst, so zieht der Bremszug 2 unter Zusammendrückung der Rückstellfeder 5 die beiden Bremshebel 3, 4 an ihren oberen Enden etwas zusammen, so daß sich auch der Abstand zwischen den beiden Bremsklötzen 8, 9 verringert. Deren Bremsflächen üben eine Bremskraft auf die Seitenflächen der Radfelge 210 aus. Beim Lösen der Felgenbremse 100 entfällt die Zugkraft des Bremszuges 2, und die vorgespannte Rückstellfeder 5 drückt die beiden Bremshebel 3, 4 wieder bis zu ihren entsprechenden Anschlägen auseinander. Dabei sind die Bremsklötze 8, 9 wieder von der Radfelge 210 gelöst.

Um die Reibung zwischen den Bremshebeln 3, 4 einerseits und den Zentrierscheiben 13, 14 andererseits möglichst gering zu halten, ist zwischen die Bremshebel 3, 4 einerseits und die Zentrierscheiben 13, 14 andererseits jeweils eine Scheibe 20, 21 mit niedrigem Reibungskoeffizienten eingelegt.

Als Material für die Scheibe 20, 21 mit niedrigem Reibungskoeffizienten eignet sich besonders gut eine glasfaserverstärkte TEFLON-Folie.

Bei der beschriebenen Felgenbremse 100 können die Bremsbacken 8, 9 gegenüber der Radfelge 210 höhenmäßig verschwenkt und die gefundene Einstellung durch Anziehen von Schrauben 22, 23 fixiert werden. Hierzu dienen verschiedene aufeinander gelagerte Scheiben mit sphärisch ausgebildeten Gleitflächen, die aufeinander abgleiten.

## Patentansprüche

1. Felgenbremse, insbesondere für Mountainbike- und Trekkingfahrräder, mit einem Paar voneinander getrennter, jeweils an ihrem unteren Ende fahrradgabel- oder fahrradrahmenseitig verschwenkbar gelagerter Bremshebel mit Bremsklötzen, dadurch gekennzeichnet, daß die Zughülle (1) mit dem Bremszug (2) im Bereich der freien Enden der Bremshebel (3, 4) von einer Seite her an den ersten Bremshebel (3) geführt ist, sich die Zughülle (1) am ersten Bremshebel (3) abstützt, und der Bremszug (2) weiter zum zweiten Bremshebel (4) verläuft und dort eingehängt ist, und daß eine Rückstellfeder (5) jeden der beiden Bremshebel (3, 4) in ihren Ruhestellungen jeweils derart gegen einen Anschlag hält, daß die Bremsklötze (8, 9) mit ausreichendem Abstand von der Radfelge (10) gelöst sind.

2. Felgenbremse nach Anspruch 1, dadurch gekennzeichnet, daß der Bremszug (2) durch die Achse der zwischen den beiden Bremshebeln (3, 4) angeordneten Rückstellfeder (5) verläuft.

3. Felgenbremse nach einem der Ansprüche 1 oder 2, dadurch gekennzeichnet, daß auf einem der Lagerzapfen (11 bzw. 12) für den betreffenden Bremshebel (3 bzw. 4) sitzend eine justierbare Zentrierscheibe (13 bzw. 14) mit einer kreissegmentförmigen Anschlagnut (15 bzw. 16) mit dem Lagerzapfen (11 bzw. 12) fest verschraubt ist, und einer der Bremshebel (3 bzw. 4) einen Zentrierstift (17 bzw. 18) aufweist, der im Ruhezustand der Felgenbremse (100) am Ende der Anschlagnut (15 bzw. 16) anschlägt, wobei die Bremsklötze (8, 9) von der Radfelge (210) symmetrisch gelöst sind.

4. Felgenbremse nach einem der Ansprüche 1 oder 2, dadurch gekennzeichnet, daß auf den Lagerzapfen (11, 12) für die Bremshebel (3, 4) sitzend jeweils eine justierbare Zentrierscheibe (13, 14) mit einer kreissegmentförmigen Anschlagnut (15, 16) mit den Lagerzapfen (11, 12) fest verschraubt ist, und die Bremshebel (3, 4) jeweils einen Zentrierstift (17, 18) haben, der im Ruhezustand der Felgenbremse (100) am Ende der Anschlagnut (15, 16) anschlägt, wobei die Bremsklötze (8, 9) von der Radfelge (210) symmetrisch gelöst sind.

5. Felgenbremse nach einem der Ansprüche 1 bis 4, dadurch gekennzeichnet, daß in den Zentrierscheiben (13, 14) jeweils eine in die Anschlagnut (15, 16) mehr oder weniger weit eindrehbare Anschlagschraube (6, 7) vorgesehen ist, an die der an dem betreffenden Bremshebel (3, 4) fest angebrachte Zentrierstift (17, 18) in Ruhestellung der Felgenbremse (100) anschlägt.

6. Felgenbremse nach einem der Ansprüche 1 bis 5, dadurch gekennzeichnet, daß die Rückstellfeder (5) eine Schraubendruckfeder ist.

7. Felgenbremse nach einem der Ansprüche 1 bis 6, dadurch gekennzeichnet, daß sich zwischen dem betreffenden Bremshebel (3, 4) und der ihm jeweils zugeordneten Zentrierscheibe (13, 14) eine Scheibe (20, 21) mit niedrigem Reibungskoeffizienten befindet.

8. Felgenbremse nach Anspruch 7, dadurch gekennzeichnet, daß die Scheibe (20, 21) mit niedrigem Reibungskoeffizienten aus glasfaserverstärkter TEFLON-Folie hergestellt ist. ist.
